# EUROPEAN PATENT APPLICATION

(11) **EP 4 290 802 A1**
(43) Date of publication of application: **13.12.2023**
(21) Application number: 22778665.4
(22) Date of filing: 22.03.2022
(51) Int. Cl.: H04L 9/06

(54) **BLOCKCHAIN EDITING METHOD AND BLOCKCHAIN NODE**

(30) Priority: 29.03.2021 CN 202110335523
(71) Applicant: Huawei Technologies Co., Ltd., Shenzhen, Guangdong 518129 (CN)
(72) Inventor: WANG, Donghui, Shenzhen, Guangdong 518129 (CN)
(74) Representative: Pfenning, Meinig & Partner mbB
(86) International application number: PCT/CN2022/082236
(87) International publication number: WO 2022/206482

(57) **Abstract**

Embodiments of this application provide a blockchain editing method and a blockchain node, so that deletion or modification of a blockchain can be traced back and proved, thereby improving blockchain security. The method includes: receiving a request message for modifying or deleting a first block in a blockchain; in response to the request, processing the first block by using a preset hash function; and storing a hash value corresponding to first information into a second block, where the second block is a block added to the blockchain, and the first information is used to indicate that the first block has been modified or deleted.

## Description

This application claims priority to Chinese Patent Application No. 202110335523.1, filed with the China National Intellectual Property Administration on March 29, 2021 and entitled "BLOCKCHAIN EDITING METHOD AND BLOCKCHAIN NODE", which is incorporated herein by reference in its entirety.

### TECHNICAL FIELD

Embodiments of this application relate to the blockchain field, and more specifically, to a blockchain editing method and a blockchain node.

### BACKGROUND

A blockchain is a tamper-proof, public, and decentralized ledger used to record transactions in public or private peer-to-peer networks. Data is generated and stored in blocks (block), which are connected to form a chain (chain) data structure in a chronological order. Blocks are used to record occurred transactions and are linked by using a hash algorithm to permanently record the history of asset transactions that occur between peer nodes in a network.

Blockchains are naturally immutable. However, blocks in the blockchains need to be modified in many real scenarios. For example, when there are harmful or potentially illegal files, images, and links on a blockchain, it is necessary to change the illegal data. From the perspective of privacy protection, GDPR stipulates that data subjects have the "right to be forgotten" and the "right to data portability". The data subjects have the right to require data control subjects to erase their personal data and stop further dissemination of the data.

In a conventional technology, a chameleon hash (chameleon hash) function is used to rewrite a block. However, this method has disadvantages that a block before deletion or modification cannot be traced back, data that once existed cannot be proved, and so on.

### SUMMARY

Embodiments of this application provide a blockchain editing method and a blockchain node, so that deletion or modification of a blockchain can be traced back and proved, thereby improving blockchain security.

According to a first aspect, a blockchain editing method is provided. The method includes: receiving a first message, where the first message is used to request to modify or delete a first block in a blockchain; in response to the first message, processing the first block by using a preset hash function; and storing a hash value corresponding to first information into a second block, where the second block is a block added to the blockchain, and the first information is used to indicate that the first block has been modified or deleted.

Optionally, the first block may be processed by using the preset hash function based on a timestamp, an event, or a condition.

With reference to the first aspect, in some implementations of the first aspect, the first information includes identification information of a Bloom filter, and the Bloom filter is used to store data information in the first block before modification or deletion.

The Bloom filter is used to store data in a block before modification or data in a block before deletion. In this way, each editing history of the blockchain can be traced back, and unauthorized processing of a blockchain node can be avoided. For example, a blockchain node does not perform modification or excessive modification.

With reference to the first aspect, in some implementations of the first aspect, the first information includes edit list information of the first block. Edit list information of a block can prove historical existence of data.

With reference to the first aspect, in some implementations of the first aspect, the first message includes data information requested to be modified, and the preset hash function is a chameleon hash function; and the processing a first block by using a preset hash function includes: determining a first root value based on the data information requested to be modified, where the first root value is a hash value of modified data in the first block; determining a first random number of the first block based on a key of the chameleon hash function and the first root value; and updating the first block by using the first root value and the first random number.

With reference to the first aspect, in some implementations of the first aspect, the method further includes: sending a second message to at least one third node, where the second message includes the first root value and the first random number that correspond to the first block, the second message is used to indicate the at least one third node to update, based on the first root value and the first random number, information stored in the third node, and the at least one third node is a blockchain node.

With reference to the first aspect, in some implementations of the first aspect, the first message is used to request to delete the first block in the blockchain, and the preset hash function is a chameleon hash function; and the processing a first block by using a preset hash function includes: determining a second root value based on the first message, where the second root value is zero; determining a second random number of the first block based on a key of the chameleon hash function and the second root value; and updating the first block by using the second root value and the second random number.

With reference to the first aspect, in some implementations of the first aspect, the method further includes: sending a third message to at least one third node, where the third message includes the second root value and the second random number that correspond to the first block, the third message is used to indicate the at least one third node to update, based on the second root value and the second random number, information stored in the third node, and the at least one third node is a blockchain node.

With reference to the first aspect, in some implementations of the first aspect, the receiving a first message includes: receiving the first message from a second node, where the second node is an owner of data stored in the first block.

With reference to the first aspect, in some implementations of the first aspect, the receiving, by a first node, a first message includes: receiving the first message from the third node, where the third node is the blockchain node.

With reference to the first aspect, in some implementations of the first aspect, before the processing the first block by using a preset hash function, the method further includes: verifying validity of the first message; and the processing a first block by using a preset hash function includes: when the first message is verified successfully, processing the first block by using the preset hash function.

With reference to the first aspect, in some implementations of the first aspect, the edit list information of the first block includes at least one of the following: a height of a modified block, a transaction identifier, a timestamp of current modification or deletion, an edit type, and a block in which an edit record is located.

With reference to the first aspect, in some implementations of the first aspect, the first message is specifically used to request to modify or delete data corresponding to a first transaction of the first block in the blockchain.

Based on the foregoing technical solution, the first node (the blockchain node) may modify or delete the first block in the blockchain based on a request message from an owner of data stored in the first block, and store the hash value of the first information indicating that the first block has been modified or deleted into a header of a block newly added to the blockchain. The first information may be the identification information of the Bloom filter configured to store the data in the first block before modification or deletion and/or the edit list information of the first block. The first information cannot be modified. Therefore, in this technical solution, deletion or modification of the blockchain can be traced back and proved, thereby improving blockchain security.

According to a second aspect, a blockchain node is provided. The blockchain includes: a transceiver module, configured to receive a first message, where the first message is used to request to modify or delete a first block in a blockchain; and a processing module, configured to: in response to the first message, process the first block by using a preset hash function, where the processing module is further configured to store a hash value corresponding to first information into a second block, where the second block is a block added to the blockchain, and the first information is used to indicate that the first block has been modified or deleted.

With reference to the second aspect, in some implementations of the second aspect, the first information includes identification information of a Bloom filter, and the Bloom filter is used to store data information in the first block before modification or deletion.

With reference to the second aspect, in some implementations of the second aspect, the first information includes edit list information of the first block.

With reference to the second aspect, in some implementations of the second aspect, the first message includes data information requested to be modified, and the preset hash function is a chameleon hash function; and the processing module is specifically configured to: determine a first root value based on the data information requested to be modified, where the first root value is a hash value of modified data in the first block; determine a first random number of the first block based on a key of the chameleon hash function and the first root value; and update the first block by using the first root value and the first random number.

With reference to the second aspect, in some implementations of the second aspect, the transceiver module is further configured to send a second message to at least one third node, where the second message includes the first root value and the first random number that correspond to the first block, the second message is used to indicate the at least one third node to update, based on the first root value and the first random number, information stored in the third node, and the at least one third node is a blockchain node.

With reference to the second aspect, in some implementations of the second aspect, the first message is used to request to delete the first block in the blockchain, and the preset hash function is a chameleon hash function; and the processing module is specifically configured to: determine a second root value based on the first message, where the second root value is zero; determine a second random number of the first block based on a key of the chameleon hash function and the second root value; and update the first block by using the second root value and the second random number.

With reference to the second aspect, in some implementations of the second aspect, the transceiver module is further configured to send a third message to at least one third node, where the third message includes the second root value and the second random number that correspond to the first block, the third message is used to indicate the at least one third node to update, based on the second root value and the second random number, information stored in the third node, and the at least one third node is a blockchain node.

With reference to the second aspect, in some implementations of the second aspect, the transceiver module is specifically configured to receive the first message from a second node, where the second node is an owner of data stored in the first block.

With reference to the second aspect, in some implementations of the second aspect, the transceiver module is specifically configured to receive the first message from the third node, where the third node is the blockchain node.

With reference to the second aspect, in some implementations of the second aspect, the processing module is further configured to verify validity of the first message; and the processing module is specifically configured to: when the first message is verified successfully, process the first block by using the preset hash function.

With reference to the second aspect, in some implementations of the second aspect, the edit list information of the first block includes at least one of the following: a height of a modified block, a transaction identifier, a timestamp of current modification or deletion, an edit type, and a block in which an edit record is located.

With reference to the second aspect, in some implementations of the second aspect, the first message is specifically used to request to modify or delete data corresponding to a first transaction of the first block in the blockchain.

According to a third aspect, a computer-readable storage medium is provided. The computer-readable medium stores a computer program (which may also be referred to as code or instructions). When the computer program is run on a computer, the computer is enabled to perform the method according to any one of the first aspect and the possible implementations of the first aspect.

According to a fourth aspect, a chip is provided. The chip includes a processor, where the processor is connected to a memory, the memory is configured to store a computer program, and the processor is configured to execute the computer program stored in the memory, so that the chip performs the method according to any one of the first aspect and the possible implementations of the first aspect.

### BRIEF DESCRIPTION OF DRAWINGS

FIG. 1 is a schematic diagram of a blockchain;
FIG. 2 is a schematic diagram of links between blocks;
FIG. 3 is a schematic diagram of blockchain replacement performed by using a chameleon hash function;
FIG. 4 is a schematic diagram of blockchain data modification in a dual-blockchain mode;
FIG. 5 is a schematic flowchart of a blockchain editing method;
FIG. 6 is a schematic diagram of block states before and after modification of a first block;
FIG. 7 is a schematic diagram of generating a hash value of edit list information of a block;
FIG. 8 is a schematic block diagram of a blockchain node according to an embodiment of this application; and
FIG. 9 is a schematic block diagram of a chip according to an embodiment of this application.

### DESCRIPTION OF EMBODIMENTS

The following describes technical solutions in this application with reference to the accompanying drawings.

Embodiments of this application may be applied to various communication systems, for example, a wireless local area network (wireless local area network, WLAN), a narrow band-internet of things (narrow band-internet of things, NB-IoT), a global system for mobile communications (global system for mobile communications, GSM), enhanced data rate for GSM evolution (enhanced data rate for gsm evolution, EDGE), a wideband code division multiple access (wideband code division multiple access, WCDMA) system, a wideband code division multiple access 2000 (code division multiple access, CDMA2000) system, a time division-synchronization code division multiple access (time division-synchronization code division multiple access, TD-SCDMA) system, a long term evolution (long term evolution, LTE) system, a satellite communication system, a 5^{th} generation (5^{th} generation, 5G) system, or a new communication system developed in the future.

Terminal devices in the embodiments of this application may include various handheld devices, vehicle-mounted devices, wearable devices, or computing device that have a wireless communication function or other processing devices connected to a wireless modem. A terminal may be a mobile station (mobile station, MS), a subscriber unit (subscriber unit), user equipment (user equipment, UE), a cellular phone (cellular phone), a smartphone (smart phone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

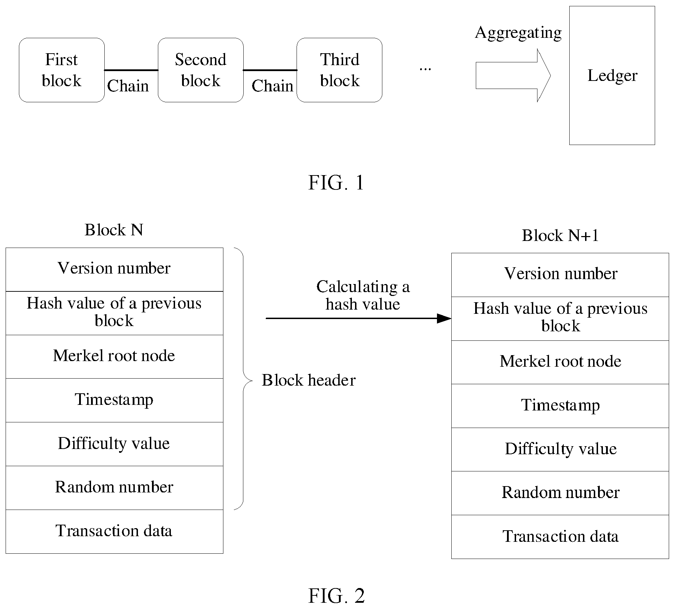

A blockchain is a tamper-proof, public, and decentralized ledger used to record transactions in public or private peer-to-peer networks. Data is generated and stored in blocks (block), which are connected to form a chain (chain) data structure in a chronological order. Blocks are used to record occurred transactions and are linked by using a hash algorithm to permanently record the history of asset transactions that occur between peer nodes in a network. All confirmed and certified transactions are linked from the initial block of a chain to the latest block, hence the name blockchain. A hash algorithm is a function used to mess up regular data of any length into data of a fixed length. Each block in a blockchain has a hash value, as an identifier, obtained by performing SHA256 encryption hash function calculation on a header. Because each block needs to be connected to a previous block, each block header has a dedicated field for storing a hash value of the previous block (parent block). In this way, each block is connected to the respective parent block, creating a blockchain. FIG. 1 is a schematic diagram of a blockchain.

FIG. 2 is a schematic diagram of links between blocks. Each block on a blockchain includes two parts: a block header and a block body. The block header includes a hash value hash, a timestamp timestamp, a random number, and the like. The block body includes data. A string of a header of a previous block includes a version number, a hash value of the previous block, a Merkle (Merkle) root node, a timestamp, a difficulty value, and a random number, and is written to the "previous block hash value" field in a header of a next block after hash calculation.

Because a blockchain is inherently unmodifiable, the following problems to its actual deployment and security are caused:
1. From the perspective of information security, current research and application in the blockchain field emphasize more on the storage and transmission security of data on a chain, but neglect the information content security, which is more important. Examples are as follows:
   (1) There is no necessary mechanism for reviewing and evaluating on-chain information. A verifier (miner) of a blockchain system focuses on checking the syntactic correctness of the on-chain information, but ignores the semantic rationality or even authenticity of information content.
   (2) A search and screening mechanism for data on a blockchain is not perfect. When harmful and potentially illegal files, images, and links exist in the blockchain, it is necessary to change illegal data.
   (3) Bad information brings large-scale, continuous, and even permanent negative effects due to the openness, transparency, and immutability of blockchains. The blockchains may become an effective way to circumvent supervision and release bad information.
2. An attack problem can be resolved only by using a hard fork. Smart contracts on a blockchain and a chain are essentially software code, which inevitably has vulnerabilities. Attackers use these vulnerabilities to steal virtual currencies, digital assets, or the like. Because the blockchain cannot be modified, results of these attacks cannot be reduced.
   For example, for a decentralized autonomous organization (decentralized autonomous organization, DAO) attack, 100 DAO tokens may be exchanged to approximately 1 to 1.5 Ethereum. In total, the DAO project has raised more than 12 million Ethereum, accounting for almost 14% of the amount of Ethereum at the time. Hackers exploited vulnerabilities and carried out more than 200 attacks, stealing 3.6 million Ethereum in total, exceeding 1/3 of the total amount raised by the project. Later, the highly anticipated hard fork was successfully implemented. After the fork, two chains were formed: One is an original chain, and the other is a new fork chain.
3. The right to be forgotten under the personal data protection regulations (personal data protection regulations, PDPR) contradicts with the immutability of blockchain. From the perspective of privacy protection, GDPR stipulates that data subjects have the "right to be forgotten" and the "right to data portability". The data subjects have the right to require data control subjects to erase their personal data and stop further dissemination of the data, and have the right to require third parties to stop processing the data. In particular, a future communication network will face a large amount of personal data of users/devices/vendor information, and the privacy problem is severe. This conflict will greatly limit exploration, use, and deployment in a future communication network of a blockchain.

In a conventional technology, a chameleon hash (chameleon hash) function is used to rewrite a block. The chameleon hash is a special hash (hash) function. The chameleon hash function has a trapdoor. An owner of the trapdoor can use the trapdoor to calculate new content, so that the new content has a same hash value as an original content, that is, hash collision occurs.

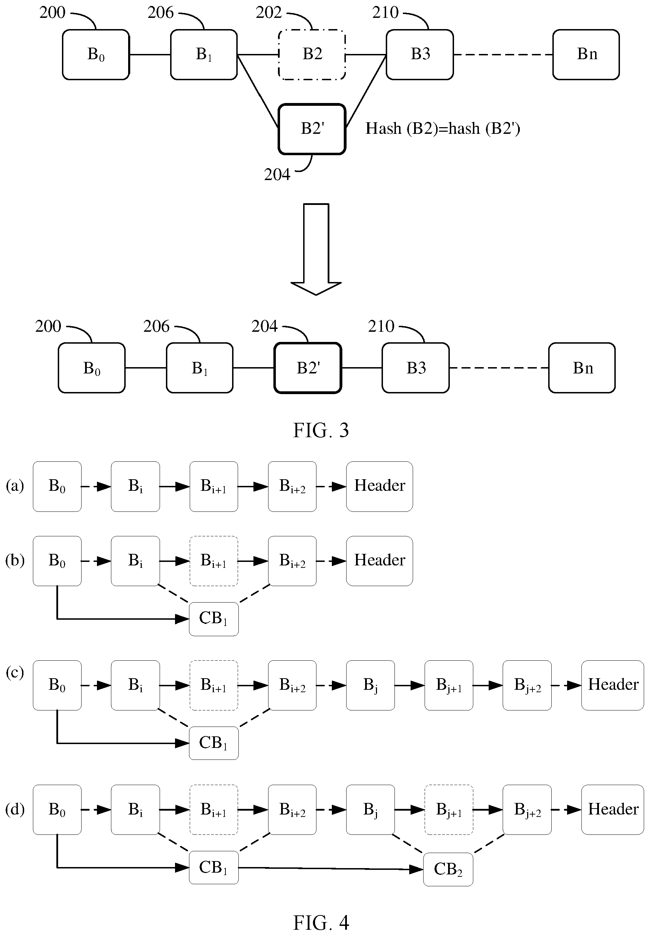

FIG. 3 is a schematic diagram of blockchain replacement performed by using a chameleon hash function. The original blockchain includes blocks B0, B1, B2, B3, ..., and Bn. When the block B2 needs to be replaced, a blockchain node that has a trapdoor calculates a block B2' by using the trapdoor, to enable hash(B2) = hash(B2'), that is, a hash value corresponding to the block B2' is the same as that corresponding to the block B2. B2 is replaced with B2', and the block B2' after the change is renumbered to obtain a modified blockchain. The modified blockchain includes blocks B0, B1, B2', B3, ..., and Bn.

The chameleon hash function is used to update a block, but the security is not enough, and there are still some shortcomings, including lack of management of the editing history, lack of audit of a blockchain editing node, and fine-grained only to blocks. Examples are as follows:
(1) There is no record of an edited history. After a block is deleted or modified, it cannot be traced back.
(2) Data that once existed cannot be proved.
(3) There is no effective method for verifying whether a block obtained on a blockchain node has been arbitrarily updated or refused to be updated except for querying more nodes.
(4) Block-level rewriting lacks definitions and descriptions of transaction levels and data item levels.

At present, a dual-blockchain mode is proposed to resolve the blockchain editing problem. The dual-blockchain mode includes a "symbiotic" data chain and a correction chain. The data chain stores original blockchain data, and the correction chain stores only modified new data at a granularity of blocks.

FIG. 4 is a schematic diagram of blockchain data modification in a dual-blockchain mode. (a) represents an original blockchain. In (b), the block Bᵢ₊₁ in the blockchain (a) is changed to a block CB₁, and the block CB₁ forms a correction chain. The block Bi+i in the original blockchain is deleted to form a data chain. (c) indicates that another original blockchain is modified, and a block Bi+i is changed to a block CB₁. (d) indicates that a block Bi+i and a block Bⱼ₊₁ in another original blockchain are changed, the block Bi+i is changed to a block CB₁, the block Bⱼ₊₁ is changed to CB₂, and the block CB₁ and the block CB₂ form a correction chain. The block Bi+i and the block Bⱼ₊₁ in the another original blockchain are deleted to form a data chain.

A blockchain verifier verifies and maintains both blockchains. When a blockchain is sequentially traversed, each time a block is found modified on the blockchain, corresponding new block data is read on a correction chain.

The data chain and the correction chain has a same genesis block. When data needs to be updated, a user requesting the update may initiate an election on the data chain and provide information such as a height of a to-be-changed block, a position of to-be-changed data, and a new block after change. The genesis block is the first block in the blockchain created in 2009, and it is the ancestor of all blocks in the blockchain. The genesis block will be reached eventually regardless of the block from which tracing is performed.

All verifiers verify the correctness of data in a new block according to a control policy, and write the data to a latest block on the correction chain after the verification succeeds.

An election transaction will initiate an on-chain voting process, and each verifier will vote based on whether they agree with the current data modification. These votes will be written to a subsequent block of the data chain. After the voting duration expires, if a quantity of verifiers who agree to the modification exceeds a predefined threshold proportion, the modification is executed, and a block after change is written to the correction chain and renumbered. An original block corresponding to the block after change may be deleted.

In the manner of modifying the blockchain by maintenance of two blockchains, the historical existence of deleted data cannot be proved, and the maintenance of two blockchains requires higher costs.

Therefore, this application provides a blockchain editing method, so that deletion or modification of a blockchain can be traced back and proved, thereby improving blockchain security.

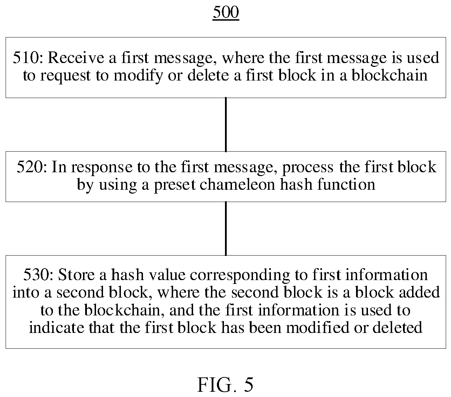

FIG. 5 is a schematic flowchart of a blockchain editing method.

510: A first node receives a first message, where the first message is used to request to modify or delete a first block in a blockchain.

The first node is a blockchain node. The blockchain node may be referred to as a maintainer or a bookkeeper of the blockchain, and is a node with computing and storage capabilities, for example, a server or a terminal. It should be understood that the first message may be specifically used to request to modify or delete data corresponding to a first transaction in the first block in the blockchain.

Specifically, optionally, the first node may receive the first message from a second node, and the second node is an owner of the data stored in the first block, for example, a user. Only an owner of the data stored in the first block is eligible to make a request to modify or delete the first block. If the owners of the data stored in the first block are both transaction parties, the two parties need to jointly initiate a modification or deletion request. In this case, there is more than one second node.

Specifically, optionally, the first node may receive the first message from a third node, and the third node is also a blockchain node. After the second node sends the first message to the third node, the third node may send the first message to the first node. Optionally, the third node may send the first message in a broadcast manner. To be specific, the third node may send the first message to another third node, and the another third node forwards the first message to the first node. This is not specifically limited in this application.

520: In response to the first message, the first node processes the first block by using a preset hash function.

The preset hash function may be a chameleon hash function, or may be a variant of a chameleon hash function. The first node may modify or delete the first block by using the chameleon hash function or the variant of the chameleon hash function.

The first node is a blockchain node that masters a key or a trapdoor of the preset hash function (chameleon hash function), and there may be one or more first nodes. When there are a plurality of first nodes, the plurality of first nodes jointly modify or delete the first block.

In an implementation, optionally, the first message includes data information requested to be modified. The first node determines a first root value based on the data information requested to be modified in the first message. The first root value is a hash value of modified data in the first block, in other words, the first root value may be understood as a current root value.

For example, the processing a first block by using a preset hash function includes: determining, by the first node, a first random number of the first block based on the key of the preset hash function and the first root value. The first node updates the first block by using the first root value and the first random number. In other words, the first node changes an original root value in the first block to the first root value, and changes an original random number to the first random number. The original root value is a hash value of data before modification in the first block.

For example, the processing a first block by using a preset hash function includes: determining, by the first node, the first random number of the first block based on the key of the preset hash function, the first root value, and a first timestamp, so that hash values corresponding to the first root value, the first timestamp, and the first random number are equal to hash values corresponding to the original root value, the original timestamp, and the original random number in the first block. The first timestamp is a current timestamp. The first node updates the first block by using the first root value, the first timestamp, and the first random number; in other words, the first node changes the original root value in the first block to the first root value, changes the original random number to the first random number, and changes the original timestamp to the first timestamp.

It should be understood that, if there are a plurality of first nodes that master the key of the preset hash function, the plurality of first nodes perform calculation together to determine the first random number of the first block.

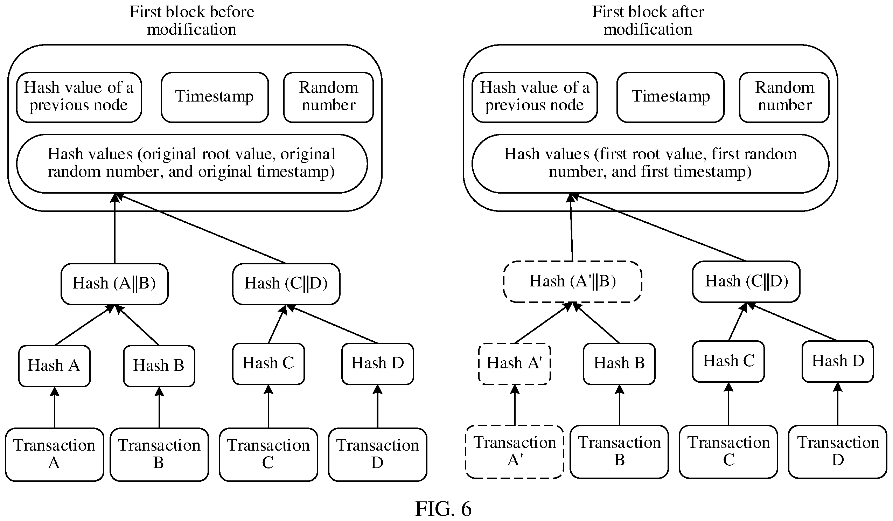

FIG. 6 is a schematic diagram of block states before and after modification of the first block.

The first block before modification stores data information of a transaction A, a transaction B, a transaction C, and a transaction D. An original root value is determined through calculation based on the transaction A, the transaction B, the transaction C, and the transaction D. The first message received by the first node may request to change the transaction A to a transaction A'. In this case, the first node changes data corresponding to the transaction Ato data corresponding to the transaction A', determines the first root value through calculation based on the transaction A', the transaction B, the transaction C, and the transaction D, determines a first random number by using the preset hash function, determines a first timestamp, and changes the original root value, an original random number, and an original timestamp to the first root value, the first random number, and the first timestamp. It should be understood that it is the block body of the first block that is changed, not the block header of the first block. The hash values corresponding to the first root value, the first random number, and the first timestamp in the block header are the same as the hash values corresponding to the original root value, the original random number, and the original timestamp. Therefore, the hash values are not changed.

There are a plurality of maintainers of a blockchain, and blockchains maintained by a plurality of blockchain nodes need to be consistent. Therefore, after updating the stored first block, the first node sends a second message to at least one third node other than the first node. The second message includes the first root value and the first random number that correspond to the first block. The second message is used to indicate the at least one third node to update, based on the first root value and the first random number, information stored in the at least one third node. Optionally, the second message includes the first root value, the first timestamp, and the first random number that correspond to the first block.

After receiving the second message sent by the first node, the third node changes the stored original root value in the first block to the first root value, changes the original random number to the first random number, and changes the original timestamp to the first timestamp.

In another implementation, optionally, the first message is used to request to delete the first block in the blockchain, that is, delete data stored in the first block. The first node determines a second root value based on the first message, and the second root value is zero or null (NULL). It should be understood that in this case, the first message is used to request to delete all transaction data in the first block. Optionally, the first message may alternatively be used to request to delete a piece of transaction data in the first block. This is not limited in this application.

For example, the processing a first block by using a preset hash function includes: determining, by the first node, a second random number of the first block based on the key of the preset hash function and the second root value. The first node updates the first block by using the second root value and the second random number. In other words, the first node changes an original root value in the first block to the second root value, and changes an original random number to the second random number. The original root value is a hash value of data before deletion in the first block.

For example, the processing a first block by using a preset hash function includes: determining, by the first node, the second random number of the first block based on the key of the preset hash function, the second root value, and a second timestamp, so that hash values corresponding to the second root value, the second timestamp, and the second random number are equal to hash values corresponding to the original root value, the original timestamp, and the original random number in the first block. The second timestamp is a current timestamp. The first node updates the first block by using the second root value, the second timestamp, and the second random number; in other words, the first node changes the original root value in the first block to the second root value, changes the original random number to the second random number, and changes the original timestamp to the second timestamp.

It should be understood that, if there are a plurality of first nodes that master the key of the preset hash function, the plurality of first nodes perform calculation together to determine the second random number of the first block.

There are a plurality of maintainers of a blockchain, and blockchains maintained by a plurality of blockchain nodes need to be consistent. Therefore, after updating the stored first block, the first node sends a third message to at least one third node other than the first node. The third message includes the second root value and the second random number that correspond to the first block. The third message is used to indicate the at least one third node to update, based on the second root value and the second random number, information stored in the at least one third node. Optionally, the third message includes the second root value, the second timestamp, and the second random number that correspond to the first block.

After receiving the third message sent by the first node, the third node changes the stored original root value in the first block to the second root value, changes the original random number to the second random number, and changes the original timestamp to the second timestamp.

Optionally, before the first node processes the first block by using the preset hash function, the first node may further verify validity of the first message based on the first message. First, the first node determines whether signature information in the first message is correct or valid. Second, the first node determines, based on the first message, whether a node requesting to modify or delete the first block is an owner of the data stored in the first block. The first node processes the first block by using the preset hash function only when the signature information is correct or valid and the node requesting to modify or delete the first block is the owner of the data stored in the first block.

Because the first message used to request to modify or delete the first block is also a transaction, the transaction data needs to be stored in the blockchain. Therefore, after verifying that the first message is valid, the first node may store the data corresponding to the first message to a newly added block in the blockchain.

Optionally, the first node may alternatively process the first block by using the preset hash function based on a timestamp or triggering of an event or a condition. This is not specifically limited in this application.

530: The first node stores a hash value corresponding to the first information into a second block, where the second block is a block added to the blockchain, and the first information is used to indicate that the first block has been modified or deleted. Specifically, the hash value corresponding to the first information is stored into a header of the second block. It should be understood that the hash value stored into the header uses a conventional hash, and cannot be modified.

Optionally, the first information may be identification information of a Bloom filter (bloom filter, BF), and the Bloom filter is used to store data in the first block before modification or data information in the first block before deletion. The identification information of the Bloom filter may be flag bit information corresponding to the Bloom filter. The first node may store the hash value corresponding to the identification information of the Bloom filter into the header of the second block. It should be understood that the data information of the first block before modification or deletion stored in the Bloom filter may be original data in the first block, may be some of original data in the first block, or may be data information obtained after original data is encoded. This is not limited in this application.

The Bloom filter is used to store data in a block before modification or data information in a block before deletion. In this way, each editing history of the blockchain can be traced back, and unauthorized processing of a blockchain node can be avoided. For example, a blockchain node does not perform modification or excessive modification.

Optionally, the first information may be edit list (block edit list, BEL) information of the first block. The first node may store a hash value corresponding to the edit list information of the first block into the header of the second block.

Edit list information of a block includes a height of a modified block, a transaction identifier, a timestamp of current modification or deletion, an edit type, and a block in which an edit record is located. The height of the modified block includes an identifier of the modified block. The transaction identifier may also be referred to as a serial number of the transaction. The edit type includes modify (modify) and delete (delete). The block in which the edit record is located is a block in which a hash value record corresponding to a request message (transaction information) requesting to modify or delete a block is located. Edit list information of a block can prove historical existence of data.

Table 1 shows edit list information of a block.

**Table 1**

| Height of a modified block | Serial number of a transaction | Timestamp of current modification or deletion | Edit type | Block in which an edit record is located |
|---|---|---|---|---|
| i | A | TS1 | Modify | 2563 |
| i | A | TS2 | Delete | 2695 |
| j | X | TS5 | Delete | 3362 |
| ... | ... | ... | ... | ... |

For a blockchain that has a high block height or that is frequently modified, segmented block edit lists may be used to reduce a query and verification time of a BEL. Table 2 shows edit list information of segmented blocks. Edit list information corresponding to a block 1 to a block m generates a hash value, which is stored into a header of a newly added block. Edit list information corresponding to a block m+1 to a block n generates another hash value, which is stored into the header of the newly added block.

**Table 2**

| Block 1 to block m | | | | |
|---|---|---|---|---|
| Height of a modified block | Serial number of a transaction | Timestamp of current modification or deletion | Edit type | Block in which an edit record is located |
| 1100 | A | TS1 | Modify | 2563 |
| 1100 | A | TS2 | Delete | 2695 |
| 3522 | X | TS5 | Delete | 3362 |
| ... | ... | ... | ... | ... |

| Block m+1 to block n | | | | |
|---|---|---|---|---|
| Height of a modified block | Serial number of a transaction | Timestamp of current modification or deletion | Edit type | Block in which an edit record is located |
| 4588 | B | TS11 | Modify | 9685 |
| 6985 | C | TS21 | Delete | 9852 |
| 6854 | T | TS51 | Delete | 8745 |
| ... | ... | ... | ... | ... |

For a blockchain that has a high block height or that is frequently modified, a hash value of BLE may be decomposed into a form of a Merkle tree (merkle tree), to reduce management costs when there are too many hashes corresponding to the BLE of the block header.

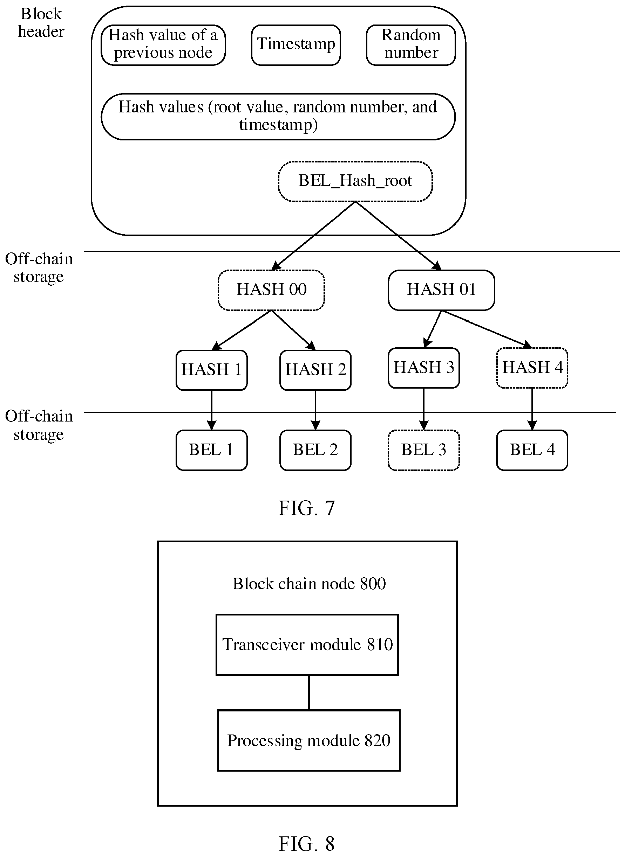

FIG. 7 is a schematic diagram of generating a hash value of edit list information of a block.

Each leaf node of each tree is a BEL stored in a chain, and every two hashes of each BEL generate BEL_Hash_root. When a BEL needs to be modified, a hash value on a corresponding path is modified in a new block, until the root node is updated. When a user needs to perform verification, the user first obtains edit list information from a corresponding BEL. For example, the user queries corresponding content in a BEL 3 and obtains the BEL_Hash_root of HASH4, HASH00, and a header of a latest block, to verify authenticity of an edit history recorded in the BEL 3.

Optionally, the first information may include the identification information of the Bloom filter and the edit list information of the first block. The first node may store both a hash value corresponding to the identification information of the Bloom filter and a hash value corresponding to the edit list information of the first block into the header of the second node.

Edit list information of a block is a type of offline block edit list information, and may be stored in storage space outside a blockchain. Each blockchain node (the first node/the third node) may maintain the edit list information of the block. After an owner of data stored in the block successfully initiates one time of block editing, the blockchain node updates the edit list information of the block once, and records a hash value corresponding to the latest edit list information of the block in a new header of the block, to ensure immutability of the edit record.

In the foregoing technical solution provided in this application, the first node (the blockchain node) may modify or delete the first block in the blockchain based on a request message from an owner of data stored in the first block, and store the hash value of the first information indicating that the first block has been modified or deleted into a header of a block newly added to the blockchain. The first information may be the identification information of the Bloom filter configured to store the data in the first block before modification or deletion and/or the edit list information of the first block. The first information cannot be modified. Therefore, in this technical solution, deletion or modification of the blockchain can be traced back and proved, thereby improving blockchain security.

An embodiment of this application provides a blockchain node. FIG. 8 is a schematic block diagram of a blockchain node 800 according to an embodiment of this application. The apparatus may be applied to the first node in the embodiments of this application. The blockchain node 800 includes:
a transceiver module 810, configured to receive a first message, where the first message is used to request to modify or delete a first block in a blockchain; and
a processing module 820, configured to: in response to the first message, process the first block by using a preset hash function.

The processing module 820 is further configured to store the hash value corresponding to the first information into a second block, where the second block is a block added to the blockchain, and the first information is used to indicate that the first block has been modified or deleted.

Optionally, the first information includes identification information of a Bloom filter, and the Bloom filter is used to store data information in the first block before modification or deletion.

Optionally, the first information includes edit list information of the first block.

Optionally, the first message includes data information requested to be modified, and the preset hash function is a chameleon hash function. The processing module 820 is specifically configured to: determine a first root value based on the data information requested to be modified, where the first root value is a hash value of modified data in the first block; determine a first random number of the first block based on a key of the chameleon hash function and the first root value; and update the first block by using the first root value and the first random number.

Optionally, the transceiver module 810 is further configured to send a second message to at least one third node, where the second message includes the first root value and the first random number that correspond to the first block, the second message is used to indicate the at least one third node to update, based on the first root value and the first random number, information stored in the third node, and the at least one third node is a blockchain node.

Optionally, the first message is used to request to delete the first block in the blockchain, and the preset hash function is a chameleon hash function. The processing module 820 is specifically configured to determine a second root value based on the first message, where the second root value is zero; determine a second random number of the first block based on a key of the chameleon hash function and the second root value; and update the first block by using the second root value and the second random number.

Optionally, the transceiver module 810 is further configured to send a third message to at least one third node, where the third message includes the second root value and the second random number that correspond to the first block, the third message is used to indicate the at least one third node to update, based on the second root value and the second random number, information stored in the third node, and the at least one third node is a blockchain node.

Optionally, the transceiver module 810 is specifically configured to receive the first message from a second node, where the second node is an owner of data stored in the first block.

Optionally, the transceiver module 810 is specifically configured to receive the first message from the third node, where the third node is the blockchain node.

Optionally, the processing module 820 is further configured to verify validity of the first message; and the processing module is specifically configured to: when the first message is verified successfully, process the first block by using the preset hash function.

Optionally, the edit list information of the first block includes at least one of the following: a height of a modified block, a transaction identifier, a timestamp of current modification or deletion, an edit type, and a block in which an edit record is located.

Optionally, the first message is specifically used to request to modify or delete data corresponding to a first transaction of the first block in the blockchain.

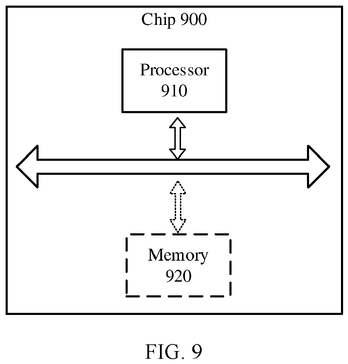

An embodiment of this application provides a chip 900. FIG. 9 is a schematic block diagram of a chip 900 according to an embodiment of this application.

The chip 900 includes a processor 910. The processor is connected to a memory 920. The memory 920 is configured to store a computer program. The processor 910 is configured to execute the computer program stored in the memory 920, so that the chip performs the method in any possible implementation of the embodiments of this application.

The processor 910 may be an integrated circuit chip, and has a signal processing capability. During implementation, the steps in the foregoing method embodiment may be completed by using a hardware integrated logical circuit in the processor or by using instructions in a form of software. The foregoing processor may be a general-purpose processor, a digital signal processor (digital signal processor, DSP), an application-specific integrated circuit (application specific integrated circuit, ASIC), a field-programmable gate array (field-programmable gate array, FPGA) or another programmable logic device, a discrete gate or transistor logic device, a discrete hardware component, or the like. The methods, steps, and logical block diagrams that are disclosed in the embodiments of this application may be implemented or performed. The general-purpose processor may be a microprocessor, any conventional processor, or the like. The steps of the methods disclosed with reference to the embodiments of this application may be directly performed and completed by using a hardware decoding processor or a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

An embodiment of this application further provides a computer-readable storage medium. The computer-readable storage medium stores a computer program used to implement the methods in the foregoing method embodiments. When the computer program is run on a computer, the computer can implement the methods in the foregoing method embodiments.

It should be understood that in the embodiments of this application, numbers such as "first" and "second" are merely used to distinguish between different objects, for example, to distinguish between different blockchain nodes, and do not constitute a limitation on the scope of the embodiments of this application. The embodiments of this application are not limited thereto.

In addition, the term "and/or" in this application is merely an association relationship for describing associated objects, and indicates that three relationships may exist. For example, A and/or B may represent the following three cases: Only A exists, both A and B exist, and only B exists. In addition, the character "/" herein generally indicates an "or" relationship between associated objects. The term "and/or" in this application may represent "one" and "two or more". For example, A, B, and/or C may represent the following seven cases: Only A exists, only B exists, only C exists, both A and B exist, both A and C exist, both C and B exist, and both A and B and C exi st.

A person of ordinary skill in the art may be aware that the units and algorithm steps of each example described with reference to the embodiments disclosed herein can be implemented in electronic hardware or a combination of computer software and electronic hardware. Whether the functions are performed by hardware or software depends on particular applications and design constraints of the technical solutions. A person skilled in the art may use different methods to implement the described functions for each specific application. However, it should not be considered that such implementation goes beyond the scope of this application.

A person skilled in the art can clearly understand that for convenient and brief description, for detailed working processes of the foregoing system, apparatus, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A blockchain editing method, comprising
receiving a first message, wherein the first message is used to request to modify or delete a first block in a blockchain;
in response to the first message, processing the first block by using a preset hash function; and
storing a hash value corresponding to first information into a second block, wherein the second block is a block added to the blockchain, and the first information is used to indicate that the first block has been modified or deleted.

2. The method according to claim 1, wherein the first information comprises identification information of a Bloom filter, and the Bloom filter is used to store data information in the first block before modification or deletion.

3. The method according to claim 1 or 2, wherein the first information comprises edit list information of the first block.

4. The method according to any one of claims 1 to 3, wherein the first message comprises data information requested to be modified, and the preset hash function is a chameleon hash function; and
the processing the first block by using a preset hash function comprises:
determining a first root value based on the data information requested to be modified, wherein the first root value is a hash value of modified data in the first block;
determining a first random number of the first block based on a key of the chameleon hash function and the first root value; and
updating the first block by using the first root value and the first random number.

5. The method according to claim 4, further comprising:
sending a second message to at least one third node, wherein the second message comprises the first root value and the first random number that correspond to the first block, the second message is used to indicate the at least one third node to update, based on the first root value and the first random number, information stored in the third node, and the at least one third node is a blockchain node.

6. The method according to any one of claims 1 to 3, wherein the first message is used to request to delete the first block in the blockchain, and the preset hash function is a chameleon hash function; and
the processing the first block by using a preset hash function comprises:
determining a second root value based on the first message, wherein the second root value is zero;
determining a second random number of the first block based on a key of the chameleon hash function and the second root value; and
updating the first block by using the second root value and the second random number.

7. The method according to claim 6, further comprising:
sending a third message to at least one third node, wherein the third message comprises the second root value and the second random number that correspond to the first block, the third message is used to indicate the at least one third node to update, based on the second root value and the second random number, information stored in the third node, and the at least one third node is a blockchain node.

8. The method according to any one of claims 1 to 7, wherein the receiving a first message comprises:
receiving the first message from a second node, wherein the second node is an owner of data stored in the first block.

9. The method according to any one of claims 1 to 7, wherein the receiving, by a first node, a first message comprises:
receiving the first message from the third node, wherein the third node is the blockchain node.

10. The method according to any one of claims 1 to 9, wherein before the processing the first block by using a preset hash function, the method further comprises:
verifying validity of the first message; and
the processing the first block by using a preset hash function comprises:
when the first message is verified successfully, processing the first block by using the preset hash function.

11. The method according to any one of claims 1 to 10, wherein the first message is specifically used to request to modify or delete data corresponding to a first transaction of the first block in the blockchain.

12. A blockchain node, comprising:
a transceiver module, configured to receive a first message, wherein the first message is used to request to modify or delete a first block in a blockchain; and
a processing module, configured to: in response to the first message, process the first block by using a preset hash function, wherein
the processing module is further configured to store a hash value corresponding to first information into a second block, wherein the second block is a block added to the blockchain, and the first information is used to indicate that the first block has been modified or deleted.

13. The node according to claim 12, wherein the first information comprises identification information of a Bloom filter, and the Bloom filter is used to store data information in the first block before modification or deletion.

14. The node according to claim 12 or 13, wherein the first information comprises edit list information of the first block.

15. The node according to any one of claims 12 to 14, wherein the first message comprises data information requested to be modified, and the preset hash function is a chameleon hash function; and
the processing module is specifically configured to:
determine a first root value based on the data information requested to be modified, wherein the first root value is a hash value of modified data in the first block;
determine a first random number of the first block based on a key of the chameleon hash function and the first root value; and
update the first block by using the first root value and the first random number.

16. The node according to claim 15, wherein
the transceiver module is further configured to send a second message to at least one third node, wherein the second message comprises the first root value and the first random number that correspond to the first block, the second message is used to indicate the at least one third node to update, based on the first root value and the first random number, information stored in the third node, and the at least one third node is a blockchain node.

17. The node according to any one of claims 12 to 14, wherein the first message is used to request to delete the first block in the blockchain, and the preset hash function is a chameleon hash function; and
the processing module is specifically configured to:
determine a second root value based on the first message, wherein the second root value is zero;
determine a second random number of the first block based on a key of the chameleon hash function and the second root value; and
update the first block by using the second root value and the second random number.

18. The node according to claim 17, wherein
the transceiver module is further configured to send a third message to at least one third node, wherein the third message comprises the second root value and the second random number that correspond to the first block, the third message is used to indicate the at least one third node to update, based on the second root value and the second random number, information stored in the third node, and the at least one third node is a blockchain node.

19. The node according to any one of claims 12 to 18, wherein
the transceiver module is specifically configured to receive the first message from a second node, wherein the second node is an owner of data stored in the first block.

20. The node according to any one of claims 12 to 18, wherein
the transceiver module is specifically configured to receive the first message from the third node, wherein the third node is the blockchain node.

21. The node according to any one of claims 12 to 20, wherein
the processing module is further configured to verify validity of the first message; and
the processing module is specifically configured to: when the first message is verified successfully, process the first block by using the preset hash function.

22. The node according to any one of claims 12 to 21, wherein the first message is specifically used to request to modify or delete data corresponding to a first transaction of the first block in the blockchain.

23. A computer-readable storage medium, wherein
the computer-readable medium stores a computer program; and
when the computer program is run on a computer, the computer is enabled to perform the method according to any one of claims 1 to 11.

24. A chip, comprising a processor, wherein the processor is connected to a memory, the memory is configured to store a computer program, and the processor is configured to execute the computer program stored in the memory, so that the chip performs the method according to any one of claims 1 to 11.
